# EUROPEAN PATENT SPECIFICATION

(11) **EP 2 937 274 B1**
(45) Date of publication and mention of the grant of the patent: **06.11.2019**
(21) Application number: 14165864.1
(22) Date of filing: 24.04.2014
(51) Int. Cl.: B62M 17/00

(54) **Support assembly for hub for an internal clutch with an external power input mechanism**
Stützanordnung für die Nabe für eine interne Kupplung mit externem Leistungseingangsmechanismus
Ensemble de support de moyeu pour un embrayage interne avec un mécanisme d'entrée d'alimentation externe

(43) Date of publication of application: 28.10.2015
(73) Proprietor: NEW KAILUNG GEAR CO., LTD., Kaohsiung (TW)
(72) Inventor: Liu, Jen-Chih, Kaohsiung (CN)
(74) Representative: Treeby, Philip David William

(56) References cited:
- BE-A- 445 617
- GB-A- 362 367
- US-A- 3 861 715
- US-A- 4 943 077

## Description

### FIELD OF THE INVENTION

The present invention relates to clutch assembling structures, and in particular to a support assembly of a hub of an internal clutch with an external power input mechanism.

### BACKGROUND OF THE INVENTION

Current power transfer of bicycles has two different forms, one uses a chain for power transfer, and another is chainless. Documents US 4 943 077 A1 and BE 445 617 A disclose examples of chainless transmissions for bicycles. The trading power of a driver applied to a crank of a bicycle is transferred to the rear wheel by a chain or chainlessly so as to drive the bicycle to move.

Currently, clutches of bikes are hidden within hubs of the bikes and are only suitable to bikes with chains, while currently no internal clutch is provided for chainless bikes; and thus no suitable driving device for guiding power out of the hub to transfer into the hubs.

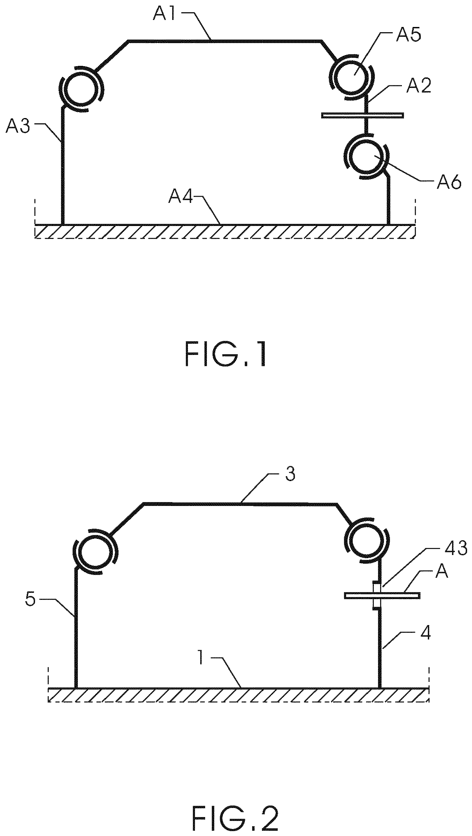

With reference to Fig. 1, conventionally, the supporting structure of the hub A1 of the internal clutch is supported by the lateral covers A2 and A3 to be installed on a fixing shaft A4. The bearings A5 are installed between the hub A1 and the lateral covers A2 and A3. A bearing A6 is installed on a position between the lateral cover A2 and the fixing shaft A4 so that the lateral cover A2 is freely rotatable. The rotatable lateral cover A2 thus serves to transfer power out of the lateral cover into the cover to drive the internal clutch to rotate. In this conventional structure, the bearing 6 is used for rotation of the lateral cover A2. However, this structure causes that the supporting structure needs higher precision and more complicated design for achieving the requirement of stability and power transfer. As a result, the structure is complicated and the cost is high. Furthermore, the overall manufacturing works are more and more complicated and cost in assembling is thus increased.

Therefore, there is an eager demand for an internal clutch installed within the hub for using to a chainless bike, in that it has a compact and simple structure for power inputting to the hub for driving the internal clutch.

### SUMMARY OF THE INVENTION

To improve above mentioned object, the present invention provides a support assembly of a hub of an internal clutch with an external power input mechanism, which is suitable for a chainless bike, in that, the structure of the present invention is simple, compact and practical; moreover, the assembly of the present invention is simple and cost thereof is low.

To achieve above object, the present invention provides a support assembly of a hub of an internal clutch with an external power input mechanism comprising a hub rotatably supported by a first lateral cover a second lateral cover which are combined by using bearings installed therebetween; the first lateral cover being fixedly retained to a fixing shaft ; the first lateral cover being formed with at least one through hole for installing a driving device; therefore, an external power can be transferred into the first lateral cover by passing through the driving device so as to drive a internal clutch therein. The driving device includes active gears and passive gears; the active gear for transferring external power is installed out of the first lateral cover. The passive gear is installed within the first lateral cover and the hub. The passive gear is engaged to the internal clutch. The active gear out of the first lateral cover is directly engaged to the passive gear and passes through the through hole.

### BRIEF DESCRIPTION OF THE DRAWINGS:

Fig. 1 is a schematic view showing a conventional supporting structure of a hub of a conventional internal clutch.
Fig. 2 is a schematic view showing the supporting assembly for a hub of an internal clutch of a bike.
Fig. 3 is a schematic view showing the first embodiment of the present invention.
Fig. 4 is a cross sectional view about the first embodiment of the present invention, which is suitable for chainless bikes.
Fig. 5 is a cross sectional view about the lateral covers, active gear and passive gear in the first embodiment of the present invention.
Fig. 6 is an assembled view of the structure shown in Fig. 5.
Fig. 7 shows the lateral cover f the first embodiment of the present invention.
Fig. 8 is a cross sectional view along line I-I of Fig. 7.
Fig. 9 is an embodiment about the passive gear of the first embodiment of the present invention.
Fig. 10 is a cross sectional view along line II-II of Fig. 9.
Fig. 11 is a schematic view showing the second embodiment of the present invention.
Fig. 12 is a cross sectional view about the second embodiment of the present invention, which is suitable for chainless bikes.

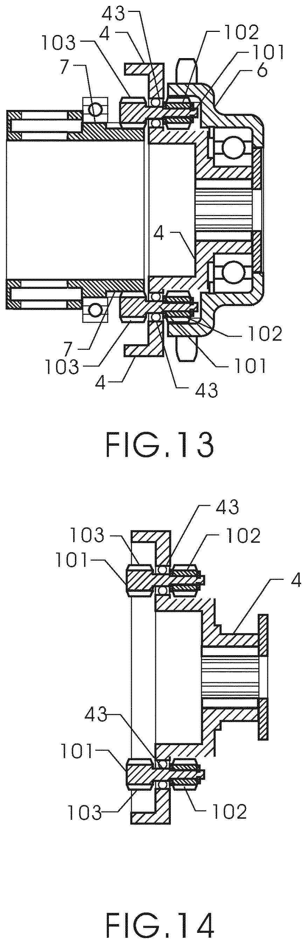

Fig. 13 is a cross sectional view showing the lateral covers, active gear, driven gear set and the passive gear of the present invention.
Fig. 14 is a cross sectional view about the lateral cover and driven gear set of the second embodiment of the present invention.

### DETAILED DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope of the present invention defined in the appended claims.

With reference to Fig. 2, the main feature of the present invention is illustrated. As illustrated in the drawing, a hub structure for an internal clutch of the present invention includes the following elements.

A hub 3 is rotatably supported by a first lateral cover 4 and a second lateral cover 5 by using bearings installed therebetween. The first lateral cover 4 is fixedly retained to a fixing shaft 1. The first lateral cover 4 is formed with at least one through hole 43 for installing a driving device A. Therefore, an external power can be transferred into the first lateral cover 4 by passing through the driving device A so as to drive an internal clutch 2 therein.

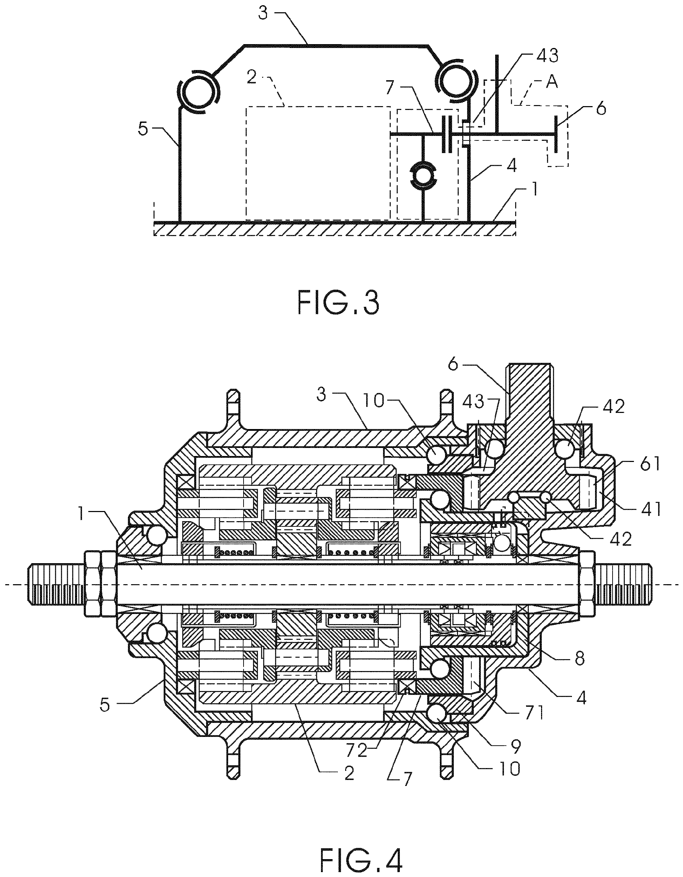

With reference to Figs. 3 and 4 and Figs. 11 and 12, in these embodiments, the first lateral cover 4 is fixed or attached to the fixing shaft 1 un-rotationally. The first lateral cover 4 is formed with a through hole 43 for receiving a driving device A.

In Figs. 3 and 4, the first embodiment according to the present invention is illustrated. The hub 3 for an internal clutch of the present invention is rotatably supported by a first lateral cover 4 and a second lateral cover 5 by using bearings installed therebetween. The first lateral cover 4 is fixedly retained to a fixing shaft 1. The first lateral cover 4 is formed with at least one through hole 43 for installing a driving device A. Therefore, an external power can be transferred into the first lateral cover 4 by the driving device A so as to drive an internal clutch 2 therein. In that the driving device A is assembled by using umbrella gear sets, surface gear sets, ratchet gear sets, spiral gear sets, etc. As illustrated in the drawings, the driving device A includes active gears 6 and passive gears 7. The active gear 6 for transferring external power is installed out of the first lateral cover 4. The passive gear 7 is installed within the first lateral cover 4 and the hub 3. The passive gear 7 is engaged to the internal clutch 2. The active gear 6 out of the first lateral cover 4 is directly engaged to the passive gear 7 and passes through the through hole 43. This structure is suitable to a hub supporting assembly for an internal clutch 2 of a chainless bike.

With reference to Figs. 4 to 8, the first lateral cover 4 as an external power input is un-rotatably fixed to the fixing shaft 1. The passive gear 6 is assembled to a base 41 by using a bearing 42 installed therebetween. The active gear 6 passes through the through hole 43 of the first lateral cover 4 to the internal of the first lateral cover 4 and is engaged to the passive gear 7 between the first lateral cover 4 and the internal clutch 2.

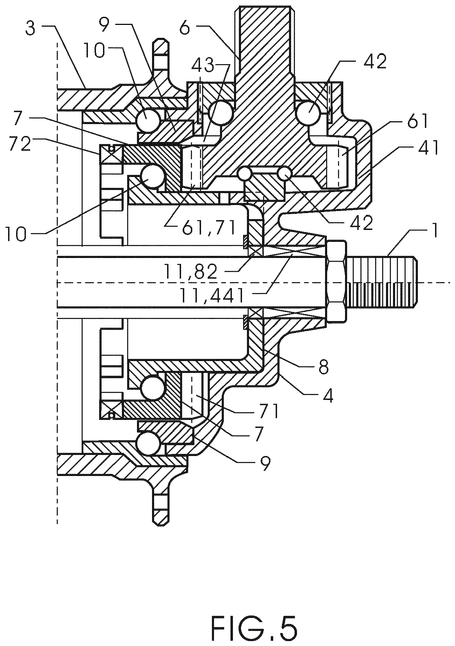

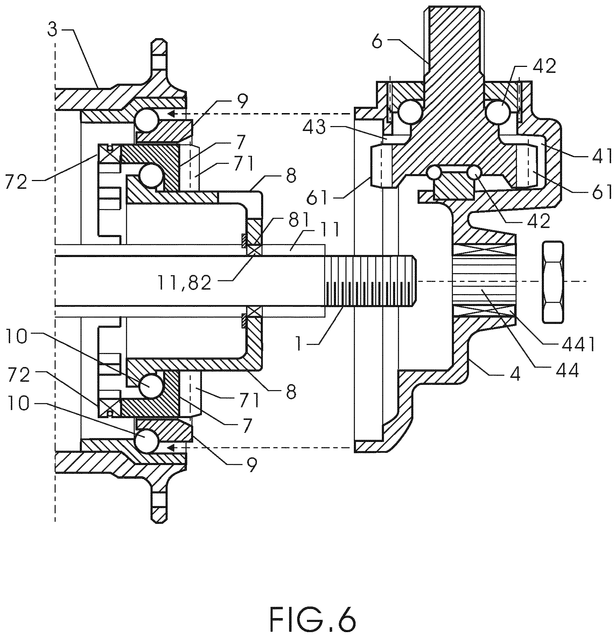

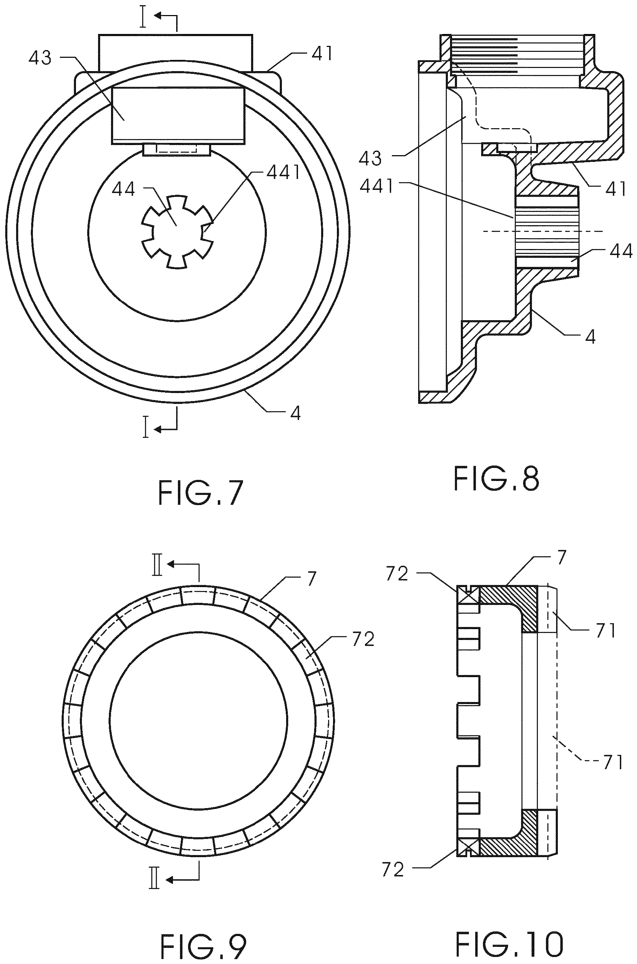

With reference to Figs. 9 and 10, the passive gear 7 installed in the first lateral cover 4 is a ring gear. One side of passive gear 7 has teeth for engaging the teeth 61 of the active gear 6 and another side thereof has teeth 72 for engaging to the internal clutch 2. As illustrated in Figs. 5 and 6, in assembling the passive gear 7, the passive gear 7 is supported by the base 8 assembled to the fixing shaft 1 by using a bearing 10. The passive gear 7 is installed in an internal space of the internal clutch 2 after the first lateral cover 4 is sealed as illustrated in Fig. 4. The internal clutch 2 is installed in the hub 3. The passive gear 7 is engaged to the active gear 6 out of the first lateral cover 4 and is installed between the first lateral cover 4 and the internal clutch 2. A center of the base 8 is installed with a buckling strip 82 and the buckling strip 82 is buckled to a trench 11 at a predetermined position of the fixing shaft 1 so as to retaining the base 8 of the fixing shaft 1.

The first lateral cover 4 is fixed to the fixing shaft 1 un-rotatably. The first lateral cover 4 is formed with an axle hole 44. A plurality of buckling strips 441 are installed within the axle hole 44 for retaining the fixing shaft 1 and a part of the fixing shaft 1 is fixed to a buckling groove 11 as that the first lateral cover 4 is un-rotatably fixed to the fixing shaft 1.

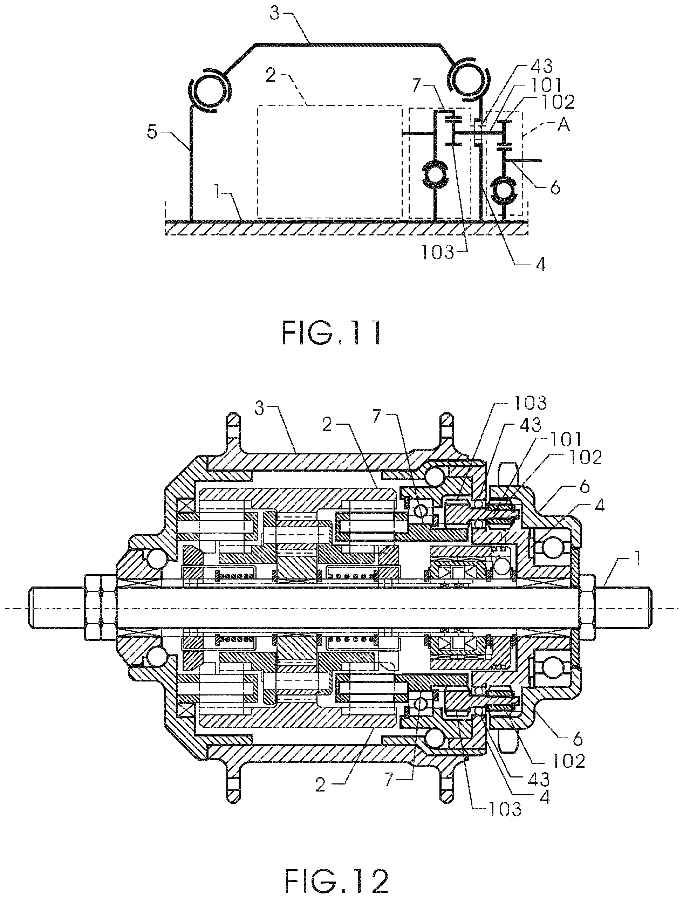

With reference to Figs. 11 and 12, the second embodiment of the present invention is illustrated. The hub 3 of the internal clutch 2 is rotatably supported on the first lateral cover 4 and the second lateral cover 5. The first lateral cover 4 and the second lateral cover 5 are fixedly assembled to the fixing shaft 1. The first lateral cover 4 is un-rotatably installed to the fixing shaft 1. The first lateral cover 4 is formed with at least one through hole 43 for being passed by a driving device A. The through hole 43 is passed through by a driving device A so that external power can be transferred into first lateral cover 4 through the driving device A and thus is transferred to the internal clutch 2 for driving the internal clutch 2 to operate. In that the driving device A is assembled by using umbrella gear sets, surface gear sets, ratchet gear sets, spiral gear sets, etc. and by various gears, and the axles of the input side and output side of the driving device A are parallel or are coaxial so that the power out of the first lateral cover 4 is transferred to the internal clutch 2 within the first lateral cover 4. The passive gear 7 is installed within the internal clutch 2 which is installed with the first lateral cover 4 and the hub 3. The passive gear 7 is engaged to the internal clutch 2. The passive gear 7 is installed to a rotation shaft 101 of a driven gear which is installed on the through hole 43 of the first lateral cover 4. Two ends of the rotation shaft 101 are formed with a first gear 102 and a second gear 103. The first gear 102 out of the through hole 43 of the first lateral cover 4 is engaged to an active gear 6. The second gear 103 within through hole 43 of the first lateral cover 4 is engaged to the passive gear 7. This embodiment is suitable for the internal clutch hub supporting structure of the power input of the driving device of a chainless bike.

Advantages of the present invention are that: the structure of the present invention is simple, compact and practical; moreover, the assembly of the present invention is simple and cost thereof is low.

The present invention is thus described, it will be obvious that the same may be varied in many ways. Such variations are not to be regarded as a departure from the scope of the present invention, and all such modifications as would be obvious to one skilled in the art are intended to be included within the scope of the following claims.

## Claims

1. A support assembly of a hub of an internal clutch with an external power input mechanism, comprising:
a hub (3) rotatably supported by a first lateral cover (4) and a second lateral cover (5) which are combined by using bearings (10) installed therebetween; and a driving device (A);
wherein the first lateral cover (4) and the second lateral cover (5) are fixedly retained to a fixing shaft (1); the first lateral cover (4) is formed with at least one through hole (43) for installing the driving device (A); the driving device (A) is operable to transfer external power into the first lateral cover (4) by passing through the driving device (A) so as to drive an internal clutch (2) therein;
**characterized in that** the first lateral cover (4) is formed with an axle hole (44); a plurality of buckling strips (441) are installed within the axle hole (44) operable to retain the fixing shaft (1) and a part of the fixing shaft (1) is fixed to a buckling groove (11) so that the first lateral cover (4) is non-rotatably fixed to the fixing shaft (1).

2. The support assembly of a hub of an internal clutch with an external power input mechanism as claimed in claim 1, wherein the driving device (A) is assembled by using at least one of umbrella gear sets, surface gear sets, ratchet gear sets, spiral gear sets or a combination thereof.

3. The support assembly of a hub of an internal clutch with an external power input mechanism as claimed in claim 1, wherein the driving device (A) is assembled by using umbrella gear sets, surface gear sets, ratchet gear sets, spiral gear sets, and by various gears, the axles of the input side and output side of the driving device (A) are parallel or are coaxial so that the power out of the first lateral cover (4) is transferred to the internal clutch (2) within the first lateral cover (4).

4. The support assembly of a hub of an internal clutch with an external power input mechanism as claimed in claim 1, wherein the driving device A includes active gears (6) and passive gears (7); the active gear (6) for transferring external power is installed out of the first lateral cover (4); the passive gear (7) is installed within the first lateral cover (4) and the hub (3); the passive gear (7) is engaged to the internal clutch (2); the active gear (6) out of the first lateral cover (4) is directly engaged to the passive gear (7) and passes through the through hole (43).

5. The support assembly of a hub of an internal clutch with an external power input mechanism as claimed in claim 4, wherein the first lateral cover (4) for inputting an external power input is non-rotatably fixed to the fixing shaft (1); the passive gear (7) is assembled to a base (8) by using a bearing (10) installed therebetween; the active gear (6) passes through the through hole (43) of the first lateral cover (4) to the internal of the first lateral cover (4) and is engaged to the passive gear (7) between the first lateral cover (4) and the internal clutch (2).

6. The support assembly of a hub of an internal clutch with an external power input mechanism as claimed in claim 4, wherein the passive gear (7) installed in the first lateral cover (4) is a ring gear; one side of passive gear (7) has teeth (71) for engaging the teeth (61) of the active gear (6) and another side thereof has teeth (72) for engaging to the internal clutch (2).

7. The support assembly of a hub of an internal clutch with an external power input mechanism as claimed in claim 4, wherein the supporting structure of the hub (3) of the internal clutch (2) is supported by the lateral covers to be installed on a fixing shaft (1); bearings (10) are installed between the hub (3) and the lateral covers.

8. The support assembly of a hub of an internal clutch with an external power input mechanism as claimed in claim 1, wherein the driving device (A) includes an active gear (6), a passive gear (7) and a driven gear set which is installed in the through hole (43) of the first lateral cover (4); the passive gear (7) is installed within the internal clutch (2) which is installed with the first lateral cover (4) and the hub (3); the passive gear (7) is engaged to the internal clutch (2); the passive gear (7) is engaged to a rotation shaft (101) of the driven gear installed on the through hole (43) of the first lateral cover (4); two ends of the rotation shaft (101) are formed with a first gear (102) and a second gear (103); the first gear (102) out of the through hole (43) of the first lateral cover (4) is engaged to an active gear (6); and the second gear (103) within through hole (43) of the first lateral cover (4) is engaged to the passive gear (7).

## Patentansprüche

1. Halteanordnung einer Nabe einer internen Kupplung mit einem Eingangsmechanismus für externe Kraft, umfassend:
eine Nabe (3), die von einer ersten seitlichen Abdeckung (4) und einer zweiten seitlichen Abdeckung (5), die unter Verwendung von dazwischen installierten Kugellagern (10) verbunden sind, drehbar gehalten wird; und eine Antriebsvorrichtung (A);
wobei die erste seitliche Abdeckung (4) und die zweite seitliche Abdeckung (5) fest an einer Befestigungsachse (1) fixiert sind; wobei die erste seitliche Abdeckung (4) mit mindestens einem Durchgangsloch (43) zum Installieren der Antriebsvorrichtung (A) gebildet ist; wobei die Antriebsvorrichtung (A) wirksam ist, um externe Kraft in die erste seitliche Abdeckung (4) zu übertragen, indem sie durch die Antriebsvorrichtung (A) gelangt, um eine interne Kupplung (2) darin anzutreiben;
**dadurch gekennzeichnet, dass** die erste seitliche Abdeckung (4) mit einem Achsloch (44) gebildet ist; eine Vielzahl von Knickstreifen (441) in dem Achsloch (44) installiert sind, die wirksam sind, um die Befestigungsachse (1) zu fixieren, und ein Teil der Befestigungsachse (1) an einer Knicknut (11) befestigt ist, sodass die erste seitliche Abdeckung (4) nicht drehbar an der Befestigungsachse (1) befestigt ist.

2. Halteanordnung einer Nabe einer internen Kupplung mit einem Eingangsmechanismus für externe Kraft nach Anspruch 1, wobei die Antriebsvorrichtung (A) unter Verwendung von mindestens einem aus Schirmzahnradsätzen, Oberflächenzahnradsätzen, Ratschenzahnradsätzen, Spiralzahnradsätzen oder einer Kombination davon montiert ist.

3. Halteanordnung einer Nabe einer internen Kupplung mit einem Eingangsmechanismus für externe Kraft nach Anspruch 1, wobei die Antriebsvorrichtung (A) unter Verwendung von Schirmzahnradsätzen, Oberflächenzahnradsätzen, Ratschenzahnradsätzen, Spiralzahnradsätzen und durch verschiedene Zahnräder montiert ist, wobei die Achsen der Eingangsseite und der Ausgangsseite der Antriebsvorrichtung (A) parallel sind oder koaxial sind, sodass die Kraft aus der ersten seitlichen Abdeckung (4) heraus auf die interne Kupplung (2) innerhalb der ersten seitlichen Abdeckung (4) übertragen wird.

4. Halteanordnung einer Nabe einer internen Kupplung mit einem Eingangsmechanismus für externe Kraft nach Anspruch 1, wobei die Antriebsvorrichtung A aktive Zahnräder (6) und passive Zahnräder (7) umfasst; wobei das aktive Zahnrad (6) zum Übertragen von externer Kraft außerhalb der ersten seitlichen Abdeckung (4) installiert ist; das passive Zahnrad (7) innerhalb der ersten seitlichen Abdeckung (4) und der Nabe (3) installiert ist; sich das passive Zahnrad (7) mit der internen Kupplung (2) im Eingriff befindet; und das aktive Zahnrad (6) aus der ersten seitlichen Abdeckung (4) heraus sich direkt mit dem passiven Zahnrad (7) im Eingriff befindet und durch das Durchgangsloch (43) gelangt.

5. Halteanordnung einer Nabe einer internen Kupplung mit einem Eingangsmechanismus für externe Kraft nach Anspruch 4, wobei die erste seitliche Abdeckung (4) zum Eingeben einer externen Krafteingabe nicht drehbar an der Befestigungsachse (1) befestigt ist; das passive Zahnrad (7) durch Verwendung eines dazwischen installierten Kugellagers (10) an einer Basis (8) montiert ist; und das aktive Zahnrad (6) durch das Durchgangsloch (43) der ersten seitlichen Abdeckung (4) zu dem Inneren der ersten seitlichen Abdeckung (4) gelangt und sich mit dem passiven Zahnrad (7) zwischen der ersten seitlichen Abdeckung (4) und der internen Kupplung (2) im Eingriff befindet.

6. Halteanordnung einer Nabe einer internen Kupplung mit einem Eingangsmechanismus für externe Kraft nach Anspruch 4, wobei es sich bei dem in der ersten seitlichen Abdeckung (4) installierten passiven Zahnrad (7) um ein Hohlzahnrad handelt; wobei eine Seite des passiven Zahnrads (7) Zähne (71) für den Eingriff mit den Zähnen (61) des aktiven Zahnrads (6) aufweist und eine andere Seite davon Zähne (72) für den Eingriff mit der internen Kupplung (2) aufweist.

7. Halteanordnung einer Nabe einer internen Kupplung mit einem Eingangsmechanismus für externe Kraft nach Anspruch 4, wobei die Haltekonstruktion der Nabe (3) der internen Kupplung (2) von den an einer Befestigungsachse (1) zu installierenden seitlichen Abdeckungen gehalten wird; wobei Kugellager (10) zwischen der Nabe (3) und den seitlichen Abdeckungen installiert sind.

8. Halteanordnung einer Nabe einer internen Kupplung mit einem Eingangsmechanismus für externe Kraft nach Anspruch 1, wobei die Antriebsvorrichtung (A) ein aktives Zahnrad (6), ein passives Zahnrad (7) und einen angetriebenen Zahnradsatz, der in dem Durchgangsloch (43) der ersten seitlichen Abdeckung (4) installiert ist, umfasst; das passive Zahnrad (7) innerhalb der internen Kupplung (2) installiert ist, die mit der ersten seitlichen Abdeckung (4) und der Nabe (3) installiert ist; sich das passive Zahnrad (7) mit der internen Kupplung (2) im Eingriff befindet; sich das passive Zahnrad (7) mit einer Drehwelle (101) des an dem Durchgangsloch (43) der ersten seitlichen Abdeckung (4) installierten angetriebenen Zahnrad im Eingriff befindet; zwei Enden der Drehwelle (101) mit einem ersten Zahnrad (102) und einem zweiten Zahnrad (103) gebildet sind; wobei das erste Zahnrad (102) aus dem Durchgangsloch (43) der ersten seitlichen Abdeckung (4) heraus sich mit einem aktiven Zahnrad (6) im Eingriff befindet; und wobei sich das zweite Zahnrad (103) innerhalb des Durchgangslochs (43) der ersten seitlichen Abdeckung (4) mit dem passiven Zahnrad (7) im Eingriff befindet.

## Revendications

1. Ensemble de support d'un moyeu d'un embrayage interne avec un mécanisme d'entrée d'alimentation externe, comportant :
un moyeu (3) supporté de manière rotative par un premier capot latéral (4) et un deuxième capot latéral (5) qui sont combinés en utilisant des paliers (10) installés entre eux ; et un dispositif d'entraînement (A) ;
dans lequel le premier capot latéral (4) et le deuxième capot latéral (5) sont retenus de manière fixe sur un arbre de fixation (1) ; le premier capot latéral (4) est formé avec au moins un trou traversant (43) à des fins d'installation du dispositif d'entraînement (A) ; le dispositif d'entraînement (A) sert à transférer une alimentation externe jusque dans le premier capot latéral (4) en passant par le dispositif d'entraînement (A) de manière à entraîner un embrayage interne (2) dans celui-ci ;
**caractérisé en ce que** le premier capot latéral (4) est formé avec un trou d'axe (44) ; une pluralité de bandes de déformation (441) sont installées à l'intérieur du trou d'axe (44) servant à des fins de retenue de l'arbre de fixation (1) et une partie de l'arbre de fixation (1) est fixée sur une rainure de déformation (11) de telle sorte que le premier capot latéral (4) est fixé de manière non rotative sur l'arbre de fixation (1).

2. Ensemble de support d'un moyeu d'un embrayage interne avec un mécanisme d'entrée d'alimentation externe selon la revendication 1, dans lequel le dispositif d'entraînement (A) est assemblé en utilisant au moins l'un parmi des trains d'engrenages en forme de parapluie, des trains d'engrenages de surface, des trains d'engrenages d'encliquetage, des trains d'engrenages à denture spirale ou une combinaison de ceux-ci.

3. Ensemble de support d'un moyeu d'un embrayage interne avec un mécanisme d'entrée d'alimentation externe selon la revendication 1, dans lequel le dispositif d'entraînement (A) est assemblé en utilisant des trains d'engrenages en forme de parapluie, des trains d'engrenages de surface, des trains d'engrenages d'encliquetage, des trains d'engrenages à denture spirale, et par divers engrenages, les axes du côté entrée et du côté sortie du dispositif d'entraînement (A) sont parallèles ou sont coaxiaux de telle sorte que l'alimentation sortant du premier capot latéral (4) est transférée à l'embrayage interne (2) à l'intérieur du premier capot latéral (4).

4. Ensemble de support d'un moyeu d'un embrayage interne avec un mécanisme d'entrée d'alimentation externe selon la revendication 1, dans lequel le dispositif d'entraînement A comprend des engrenages actifs (6) et des engrenages passifs (7) ; l'engrenage actif (6) servant à transférer l'alimentation externe est installé hors du premier capot latéral (4) ; l'engrenage passif (7) est installé à l'intérieur du premier capot latéral (4) et du moyeu (3) ; l'engrenage passif (7) est mis en prise par rapport à l'embrayage interne (2) ; l'engrenage actif (6) hors du premier capot latéral (4) est directement mis en prise par rapport à l'engrenage passif (7) et passe au travers du trou traversant (43).

5. Ensemble de support d'un moyeu d'un embrayage interne avec un mécanisme d'entrée d'alimentation externe selon la revendication 4, dans lequel le premier capot latéral (4) servant à entrer une entrée d'alimentation externe est fixé de manière non rotative sur l'arbre de fixation (1) ; l'engrenage passif (7) est assemblé sur une base (8) en utilisant un palier (10) installé entre eux ; l'engrenage actif (6) passe au travers du trou traversant (43) du premier capot latéral (4) jusqu'à la partie interne du premier capot latéral (4) et est mis en prise par rapport à l'engrenage passif (7) entre le premier capot latéral (4) et l'embrayage interne (2).

6. Ensemble de support d'un moyeu d'un embrayage interne avec un mécanisme d'entrée d'alimentation externe selon la revendication 4, dans lequel l'engrenage passif (7) installé dans le premier capot latéral (4) est une couronne ; un côté de l'engrenage passif (7) a une denture (71) servant à des fins de mise en prise de la denture (61) de l'engrenage actif (6) et un autre côté de celui-ci a une denture (72) servant à des fins de mise en prise par rapport à l'embrayage interne (2).

7. Ensemble de support d'un moyeu d'un embrayage interne avec un mécanisme d'entrée d'alimentation externe selon la revendication 4, dans lequel la structure de support du moyeu (3) de l'embrayage interne (2) est supportée par les capots latéraux à des fins d'installation sur un arbre de fixation (1) ; des paliers (10) sont installés entre le moyeu (3) et les capots latéraux.

8. Ensemble de support d'un moyeu d'un embrayage interne avec un mécanisme d'entrée d'alimentation externe selon la revendication 1, dans lequel le dispositif d'entraînement (A) comprend un engrenage actif (6), un engrenage passif (7) et un train d'engrenages menés qui est installé dans le trou traversant (43) du premier capot latéral (4) ; l'engrenage passif (7) est installé à l'intérieur de l'embrayage interne (2) qui est installé avec le premier capot latéral (4) et le moyeu (3) ; l'engrenage passif (7) est mis en prise par rapport à l'embrayage interne (2) ; l'engrenage passif (7) est mis en prise par rapport à un arbre de rotation (101) de l'engrenage mené installé sur le trou traversant (43) du premier capot latéral (4) ; deux extrémités de l'arbre de rotation (101) sont formées avec un premier engrenage (102) et un deuxième engrenage (103) ; le premier engrenage (102) hors du trou traversant (43) du premier capot latéral (4) est mis en prise par rapport à un engrenage actif (6) ; et le deuxième engrenage (103) à l'intérieur du trou traversant (43) du premier capot latéral (4) est mis en prise par rapport à l'engrenage passif (7).
